(19) Europäisches Patentamt / European Patent Office / Office européen des brevets

(11) **EP 3 163 487 B1**

(12) **FASCICULE DE BREVET EUROPEEN**

(45) Date de publication et mention
de la délivrance du brevet:
**18.08.2021 Bulletin 2021/33**

(51) Int Cl.:
**G06Q 20/38** *(2012.01)*     **G06Q 20/32** *(2012.01)*
**G06Q 20/40** *(2012.01)*     **G06F 21/34** *(2013.01)*

(21) Numéro de dépôt: **16195082.9**

(22) Date de dépôt: **21.10.2016**

(54) **PROCÉDÉ DE SÉCURISATION DE TRAITEMENT DE DONNÉES TRANSACTIONNELLES, TERMINAL ET PROGRAMME D'ORDINATEUR CORRESPONDANT**

VERFAHREN, COMPUTERTERMINAL UND COMPUTERPROGRAMM ZUR SICHERUNG DER VERARBEITUNG TRANSAKTIONELLER DATEN

METHOD, TERMINAL, AND COMPUTER PROGRAM FOR SECURING THE PROCESSING OF TRANSACTIONAL DATA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.10.2015 FR 1560270**

(43) Date de publication de la demande:
**03.05.2017 Bulletin 2017/18**

(73) Titulaire: **Ingenico Group**
**75015 Paris (FR)**

(72) Inventeurs:
• **KOUDOUSSI, Hiba**
**75012 Paris (FR)**
• **GERAUD, Rémi**
**75018 Paris (FR)**

(74) Mandataire: **Vidon Brevets & Stratégie**
**16B, rue de Jouanet**
**BP 90333**
**35703 Rennes Cedex 7 (FR)**

(56) Documents cités:
**US-A1- 2011 225 090**     **US-A1- 2011 225 094**
**US-A1- 2011 270 757**

EP 3 163 487 B1

**Description**

**1. Domaine**

L'invention se rapporte au domaine du traitement transactionnel. Plus particulièrement, la technique proposée se rapporte au domaine du traitement de données transactionnelles de paiement, ces données transactionnelles de paiement devant être sécurisées. Ainsi, un objet de la présente technique est d'apporter une sécurisation des échanges de données lorsqu'une transaction est réalisée. Plus spécifiquement encore, un objet de la présente technique est d'augmenter le niveau de sécurité d'une transmission de données dans le cadre d'un paiement réalisé avec un terminal mobile intelligent (par exemple un smartphone ou une tablette) et une carte de paiement.

**2. Art Antérieur**

US 2011/225090 A1 divulgue un système et un procédé correspondant pour rendre les achats en ligne plus sûrs et plus pratiques. Un module du côté du client peut lire les informations d'une carte bancaire sans contact et remplir automatiquement les champs correspondants dans un formulaire de commande en ligne. Pour une sécurité accrue, un code d'authentification courant dynamique est généré à la place du code statique CVV habituel. Ladite génération peut prendre en compte, entre autres, un identifiant du terminal de communication.

L'utilisation de terminaux mobiles intelligents (comme par exemple des téléphones intelligents - smartphone- ou des tablettes) ne cesse de progresser. Cette progression s'illustre également lorsqu'il s'agit de réaliser un paiement, par exemple sur un site internet d'un commerçant. Ainsi, le nombre de transactions réalisées sur un terminal mobile intelligent augmente de jour en jour. Il apparait que ce nombre pourrait progresser de manière encore plus importante. Plus spécifiquement, on distingue traditionnellement deux types de manière de réaliser un paiement sur ces types de terminaux.

Le premier type consiste à réaliser un paiement directement dans une application dédiée à un commerçant donné. Par exemple, le commerçant dispose d'une application de commerce électronique, qui est installée sur le terminal de l'utilisateur. Celui-ci peut effectuer un achat en sélectionnant un ou plusieurs biens ou services et en effectuant un règlement par carte bancaire (en saisissant ou en sélectionnant des données pré saisies dans les champs de paiement prévus à cet effet).

Le deuxième type consiste à se rendre, à l'aide d'un navigateur (logiciel qui permet de réaliser une navigation sur un site internet) sur un site internet du commerçant. Le site internet comprend par exemple une interface dédiée aux terminaux mobiles, afin de faciliter la navigation sur des écrans de taille réduite. Lorsqu'il a terminé la sélection de ses biens ou service, l'utilisateur réalise le paiement. Ceci passe souvent par la saisie, au sein de l'interface de paiement, des données de carte bancaire (nom, numéro, date d'expiration et code de vérification (cvv)). Or, une telle saisie, au sein d'une interface non spécifiquement dédiée à cela peut être problématique. En effet, l'effet combiné de la petite taille des caractères affichés et du masquage, par le clavier virtuel (clavier affiché à l'écran du terminal), d'une moitié environ de la surface affichée à l'écran, rend la saisie des données de carte bancaire compliquée pour l'utilisateur. Cela se traduit par un taux de conversion (taux de transformation de la commande en un véritable achat) réduit.

Pour faciliter l'acte d'achat, deux solutions sont utilisées : le première solution consiste à enregistrer, au sein d'un serveur distant, des données de cartes bancaires lors d'un premier achat (ceci est appelé phase d'"enrolment" en anglais). Dans cette première solution, les opérations menées consistent notamment à associer, au compte utilisateur existant, des données da carte bancaire de l'utilisateur. Ainsi, lors de son prochain achat, l'utilisateur sera en mesure de sélectionner, directement, ces données déjà saisies pour pouvoir régler ses achats. Cette solution est intéressante mais elle présente l'énorme désavantage de devoir procéder à l'enregistrement de ces données pour chaque commerçant : chaque commerçant utilisant sa propre base de données et sa propre architecture de gestion de comptes clients. Ainsi l'utilisateur doit tout de même saisir ses données de carte bancaire dès qu'il souhaite régler un achat en ligne, sur un site web ou dans une application qu'il n'a pas utilisé préalablement.

La deuxième solution consiste à utiliser les propriétés de certains navigateurs : ils mémorisent eux-mêmes les saisies effectuées par l'utilisateur. Comme de nombreux sites internet utilisent des champs de saisies qui portent des noms identiques, la fonction de mémorisation automatique du navigateur peut être utilisée pour saisir de l'information dans ces champs de manière plus rapide. Cette solution peut être mise en œuvre facilement mais elle présente plusieurs problèmes : cette solution est limitée aux sites web ; les sites web n'utilisent pas tous le même nom pour un champ de saisie donné ; les sites web, pour le paiement utilisent normalement une connexion chiffrée (https) qui ne permet pas de saisie de ce type.

Ainsi, il existe un besoin d'une solution simple, peu couteuse et rapide de saisie des données bancaires relatives à un paiement à effectuer. Par ailleurs, il existe un besoin d'une solution qui soit également sécurisée. En effet, un des problèmes rencontrés se situe également au niveau de l'authentification tant de l'utilisateur que du moyen de paiement. Il est donc nécessaire de disposer, de manière complémentaire, d'une solution qui soit efficace en terme de sécurisation.

**3. Résumé**

La présente technique résout au moins certains des problèmes de l'art antérieur. Plus particulièrement, la technique proposée se rapporte à un procédé de sécurisation de traitement de données, en provenance d'un moyen de paiement sans contact. Une tel procédé comprend notamment l'acquisition automatique de données en provenance du moyen de paiement d'une part et d'autre part la sécurisation de la transmission et du traitement de ces données au sein d'un réseau de communication, afin qu'elles soient traitées.

La technique se rapporte ainsi à un procédé de sécurisation de traitement de données transactionnelles, procédé mis en œuvre au sein d'un terminal de communication comprenant un module de traitement de données transactionnelles. Un tel procédé comprend :

- une étape de détection, par le module de traitement, d'un affichage d'une zone de saisie relative à une donnée de moyen de paiement ;
- une étape d'activation, par le module de traitement, d'un module de lecture de données sans contact ;
- une étape d'obtention, par le module de lecture de données sans contact, d'au moins une donnée de moyen de paiement en provenance d'un moyen de paiement ;
- une étape de fourniture, à la zone de saisie, d'au moins une donnée de moyen de paiement précédemment obtenue.

Ainsi, la technique proposée permet de simplifier de manière très importante la saisie des données nécessaires à la transaction. En effet, l'utilisateur se contente de présenter son moyen de paiement (sans contact) au terminal de communication afin que celui-ci soit lu et que le module de traitement valorise automatiquement les données nécessaires au traitement.

En fonction des modes de réalisation et des besoins, les données obtenues par le module transactionnel du terminal de communication sont par exemple le nom, le prénom, le numéro de carte bancaire, la date d'expiration, le code de vérification visuel.

Selon une caractéristique particulière, le procédé de sécurisation de traitement comprend une étape de génération, par le module de traitement, d'un code d'authentification courant en fonction d'une identification du terminal de communication.

Selon une caractéristique particulière, l'étape de génération du code d'authentification courant comprend :

- une étape d'obtention d'une donnée d'identification du terminal de communication ;
- une étape d'obtention d'une donnée d'authentification dudit utilisateur auquel ledit terminal de communication est associé ;
- une étape de chiffrement de ladite donnée d'identification du terminal de communication et de ladite donnée d'authentification dudit utilisateur, délivrant le code d'authentification courant.

Selon une caractéristique particulière, le procédé de sécurisation de traitement comprend une étape de fourniture, dans une zone de saisie préalablement sélectionnée, dudit code d'authentification courant.

Ainsi, en sus des données usuelles, saisies habituellement par l'utilisateur dans les zones de saisie prévues à cet effet (zone de nom, de prénom, de date de validité de numéro de carte), le procédé permet de sécuriser la transaction en saisissant une donnée calculée au sein même du terminal. Cette donnée permet en effet d'assurer que la transaction est réalisée au sein d'un terminal identifié.

Selon une caractéristique particulière, le code d'authentification courant est fourni dans une zone de saisie du code de vérification de carte bancaire.

Ainsi, la technique proposée ne nécessite pas la mise en œuvre d'une nouvelle zone de saisie. En effet, en utilisant la zone de saisie du code de vérification (également appelé en anglais "card verification code" ou "card verification value"), il n'est pas utile de développer ou de redévelopper de nouvelles applications, et notamment de nouvelles applications de paiement (par exemple sur les sites internet et/ou sur les applications des marchands).

À l'issue de la mise en œuvre de cette technique, selon cette dernière caractéristique, les champs nécessaires au paiement ont été saisis de manière automatique. En sus, le champ code de vérification comprend le code d'authentification précédemment généré. L'utilisateur est donc en mesure de valider le paiement.

Selon une caractéristique particulière, ce procédé comprend en outre une étape préalable d'obtention d'une valeur d'occurrence de mise en œuvre du procédé de sécurisation de traitement et lorsqu'il s'agit de la première occurrence de mise en œuvre du procédé, le procédé comprend une étape de création d'une donnée représentative d'un lien entre le terminal de communication et un serveur de traitement transactionnel.

Ainsi, lors de la première mise en œuvre du service, il est possible d'établir un lien fort entre le terminal de communication et un ou plusieurs serveurs en charge de la mise en œuvre de la transaction. Il s'agit par exemple d'un serveur d'un prestataire de services de paiement.

Selon une caractéristique particulière, l'étape de création d'une donnée d'authentification de référence entre le terminal de communication et un serveur de traitement transactionnel comprend :

- une étape d'obtention d'une donnée d'identification du terminal de communication ;
- une étape d'obtention d'une donnée d'authentification dudit utilisateur auquel ledit terminal de communication est associé ;
- une étape de chiffrement de ladite donnée d'identification du terminal de communication et de ladite donnée d'authentification dudit utilisateur, délivrant la donnée représentative du lien entre le terminal de paiement et le serveur du prestataire de services de paiement ;
- une étape de transmission de ladite donnée d'authentification de référence à un serveur du prestataire de services de paiement.

Selon un autre aspect, la présente technique se rapporte également à un procédé de sécurisation de traitement de données transactionnelles, au sein d'un serveur.

Selon une caractéristique particulière, le procédé comprend lors de la réception des données issues de ladite au moins une zone de saisie par un serveur de traitement, au moins une étape de comparaison entre au moins une donnée transmise au sein de ladite zone de saisie et de la donnée d'authentification de référence, délivrant une assertion de validation de la transaction.

Selon un autre aspect, l'invention se rapporte également à un terminal de communication intelligent caractérisé en ce qu'il comprend un module de traitement de données transactionnelles et un module d'obtention de données sans contact, caractérisé en ce que le module de traitement comprend :

- des moyens de détection, d'un affichage d'au moins une zone de saisie relative à une donnée de moyen de paiement ;
- des moyens d'activation, du module de lecture de données sans contact ;
- des moyens d'obtention, par le module de lecture de données sans contact, d'au moins une donnée de moyen de paiement en provenance d'un moyen de paiement ;
- des moyens de fourniture, à ladite au moins une zone de saisie, d'au moins une donnée de moyen de paiement précédemment obtenue.

Selon une implémentation préférée, les différentes étapes des procédés selon la technique proposée sont mises en œuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes des procédés tel que mentionné ci-dessus, lorsqu'ils sont exécutés par un terminal et/ou par un circuit intégré.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur, une mémoire flash ou une mémoire d'un de stockage d'un autre type.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de la technique proposée.

## 4. Figures

D'autres caractéristiques et avantages de la technique proposée apparaîtront plus clairement à la lecture de la description suivante d'un mode de réalisation préférentiel, donné à titre de simple exemple illustratif et non limitatif, et des dessins annexés, parmi lesquels :

- la figure 1 expose un synoptique de la méthode générale mise en œuvre pour la saisie facilitée des données de paiement au sein d'un formulaire ;
- la figure 2 expose les étapes générales mise en œuvre lors de la création, par le terminal de communication, d'un code d'authentification courant ;
- la figure 3 expose les étapes mise en œuvre lors de la création, par le terminal de communication, d'un code d'authentification courant selon un mode de réalisation particulier ;
- la figure 4 expose les étapes mise en œuvre par un serveur de prestataire de paiement pour valider un code d'authentification courant selon un mode de réalisation particulier ;
- la figure 5 décrit succinctement l'architecture matérielle d'un terminal adapté pour mettre en œuvre la présente technique ;
- la figure 6 décrit succinctement l'architecture matérielle d'un serveur adapté pour mettre en œuvre la présente technique.

## 5. Description

### 5.1. Rappel du principe

Le principe général de la présente technique repose d'une part sur la mise en œuvre d'un terminal de communication intelligent, comprenant des moyens d'obtention de données en provenance d'un moyen de paiement. Plus spécifiquement, un moyen d'obtention de données en provenance d'un moyen de paiement se présente sous la forme d'un module de communication sans contact, un tel module étant plus spécifiquement un module de communication en champ proche (NFC). Ce module reçoit de la part d'un processeur du terminal de communication, une instruction ou une commande d'obtention de données sans contact. Il peut s'agir d'une commande à caractère général. Par ailleurs, ce module est relié à une antenne sans contact. Cette antenne sans contact sert à émettre un signal à destination du moyen de paiement et à recevoir un signal en provenance de ce moyen de paiement.

Le principe général de la présente technique repose d'une part sur la mise en œuvre d'une application, installée au sein du terminal de communication intelligent, application comprenant des moyens de détection et de remplissage de champs de saisie de données de moyens de paiement.

Un moyen de paiement sans contact se présente par exemple sous la forme d'une carte de paiement (ou carte de crédit ou carte de débit), comprenant une antenne de type NFC ("Near Field Communication"), cette antenne comprenant des moyens de transmission de données vers un récepteur, lorsqu'elle reçoit, de la part de ce récepteur, une requête en ce sens (la requête prenant par exemple la forme d'un signal électromagnétique). L'antenne, appelé antenne sans contact, peut être reliée à un processeur. Ce processeur peut par exemple être la puce de la carte à puce ou un processeur supplémentaire noyé dans le substrat de la carte (tout comme l'antenne d'ailleurs). Accessoirement, un moyen de paiement sans contact peut également se présenter sous la forme d'un terminal de communication (un deuxième terminal de communication), lequel est muni de moyens de transmission de données sans contact et éventuellement d'une application spécifiquement destinée à transmettre des données équivalentes ou identiques à des données de carte de paiement. Une telle application peut par exemple être une application bancaire, installée au sein du terminal de communication, et qui conserve ces données de manière sécurisée. Dans ce cas, par exemple, la technique est mise en œuvre en apposant ce deuxième terminal de communication sur le premier terminal de communication. Une telle mise en œuvre est tout à fait envisageable dans la mesure où de nombreuses personnes disposent à la fois d'une tablette et d'un téléphone intelligent, le téléphone intelligent disposant de l'application bancaire tandis que la tablette est utilisée de manière plus générale et plus libre par plusieurs personnes du foyer, cette tablette n'étant pas destinée à contenir des données confidentielles.

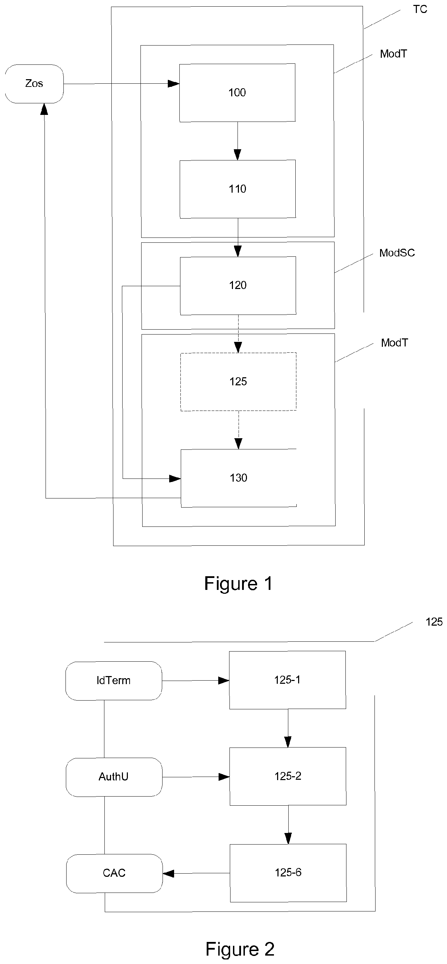

On présente, en relation avec les figures 1 et 2, les différentes étapes de mise en œuvre du procédé selon la présente technique, d'un point de vue général. La mise en œuvre du procédé comprend, préalablement, la sélection au sein d'une application ou d'un navigateur d'un ou plusieurs biens ou services que l'utilisateur souhaite acquérir. Lorsque l'utilisateur a sélectionné ce qu'il souhaite acquérir, il passe en phase de paiement. Cette phase de paiement débute par l'affichage d'un écran (page HTML ou page d'une application) comprenant des champs de saisie de données de moyen de paiement (par exemple des données de carte bancaires). Dès lors, le procédé de la présente technique peut être mis en œuvre. Cette méthode générale comprend d'une part un procédé mis en œuvre du côté du terminal de communication et d'autre part un procédé mis en œuvre du côté d'un serveur (serveur du prestataire de services de paiement par exemple ou serveur bancaire directement). Pour les besoins de la présente, les deux procédés sont présentés de manière imbriquée afin d'exposer une méthode de traitement la plus claire possible. Il est clair cependant que ces procédés peuvent être mis en œuvre de manière indépendante. On présente le procédé général de traitement en relation avec la figure 1.

Lors de l'affichage de l'écran comprenant les champs de saisie de données nécessaires au paiement, un module de traitement (ModT) installé au sein du terminal de communication (TC) (par exemple sous la forme d'une application particulière) :

- détecte (100) l'affichage de ces zones de saisie ; pour ce faire, le module de traitement (ModT) met en œuvre une technique particulière qui n'est pas l'objet de la présente ;
- le module de traitement (ModT) active (110) alors le module de lecture de données sans contact (ModSC) ; de manière complémentaire, le module de traitement (ModT) prend possession de l'affichage réalisé sur le terminal de communication; cette prise de possession est réalisée sous la forme d'une interruption de l'application demanderesse (application spécifique du marchand ou navigateur) ; l'application demanderesse est "gelée" et le module de traitement (ModT) affiche, en transparence, en surbrillance, par exemple le logo de paiement sans contact est affiché par le module de traitement (ModT) ;
- l'utilisateur utilise son moyen de paiement : l'utilisateur appose son moyen de paiement sur le terminal de communication ;
- le module de lecture de données sans contact (ModSC) obtient (120) alors, par l'intermédiaire d'une requête et d'une réponse du moyen de paiement, les données nécessaires au paiement. Le nombre et la désignation de ces données varient en fonction des exigences réglementaires et des pratiques des marchands et des prestataires de services de paiement; typiquement, les données obtenues sont : le nom, le prénom, la date d'expiration et le numéro de carte bancaire et le code de vérification ;
- le module de lecture des données sans contact transfère les données obtenues au module de traitement (ModT) du terminal de communication; le module de traitement (ModT) effectue alors un remplissage (130) des zones de saisie en fonction des données reçues du moyen de paiement : le module de traitement (ModT) affecte les données reçues aux zones identifiées précédemment ; le module de traitement (ModT), dans le même temps, rend le contrôle à l'application demanderesse et annule l'affichage du logo de paiement sans contact (si celui-ci est affiché) ;

Dans un premier mode de réalisation de la présente technique, les opérations effectuées précédemment suffisent. L'utilisateur n'a plus qu'à vérifier et valider les données saisies. La suite du processus de paiement est identique à l'existant et la transaction suit son cours comme usuellement.

De manière complémentaire, dans d'autres modes de réalisation plus sécurisés, on s'assure que le terminal et l'utilisateur effectuant l'opération de paiement son bien autorisés à la faire. Un tel mode de réalisation est notamment présenté en relation avec les figures 1 et 2. Pour ce faire, dans ces modes de réalisation complémentaire, le module de traitement (ModT) du terminal de communication met en œuvre une étape de création (125) d'un code d'authentification courant (CAC). La création de ce code d'authentification courant (CAC) comprend les étapes suivantes :

- une étape d'obtention (125-1) d'une donnée d'identification du terminal de communication (IdTerm) ; une telle donnée d'identification, selon les modes de réalisation peut par exemple être un numéro de série, un IMSI (de l'anglais pour "International Mobile Subscriber Identity"), un IMEI (de l'anglais pour "International Mobile Equipment Identity") ou autre ou encore une combinaison de ces codes ;
- une étape d'obtention (125-2) d'une donnée d'authentification dudit utilisateur (AuthU) auquel ledit terminal de communication est associé ; une telle données d'authentification peut être en fonction du mode de réalisation, une donnée biométrique (par exemple une signature d'une empreinte digitale ou d'une empreinte vocale) ou encore un code d'authentification personnel (de type code PIN) ;
- une étape de chiffrement (125-6) de ladite donnée d'identification du terminal de communication et de ladite donnée d'authentification dudit utilisateur, délivrant le code d'authentification courant (CAC) ; cette étape de chiffrement, qui est détaillée par la suite, consiste à chiffrer et/ou à hascher les données précédemment obtenues et à en produire un code d'authentification ; bien entendu, de manière complémentaire, les données sont chiffrées ou haschées avec une ou plusieurs clés de chiffrement à disposition du module de traitement (ModT)s du terminal de communication de l'utilisateur.

Une fois que le module de traitement (ModT) dispose du code d'authentification courant (CAC), il fournit ce code d'authentification courant (CAC) à l'application demanderesse. Cette fourniture peut être effectuée de plusieurs manières (par exemple en remplissant un champ "code d'authentification" de l'écran de saisie. Selon un mode de réalisation avantageux, cependant, le code d'authentification prend la place, du code de vérification "CVV". Ainsi, en lieu et place du CVV, qui peut être obtenu en lecture sans contact à partir du moyen de paiement (comme précédemment indiqué), ce champ de saisie CVV est rempli avec le code d'authentification courant (CAC). Avantageusement, le mode de calcul du code d'authentification courant comprend au moins une étape de formatage de sorte que la taille du code d'authentification courant corresponde à une taille acceptée par la zone de saisie se rapportant au CVV. Ainsi, il n'y a pas de difficulté d'insertion du CAC dans la zone prévue pour le CVV.

Dès lors, du point de vue du prestataire de services de paiement, le processus de validation de la transaction est quelque peu différent de celui mis en œuvre usuellement. En effet, la validation, par l'utilisateur, du formulaire de saisie des données de paiement provoque la transmission (directe ou indirecte : i.e. par l'intermédiaire du serveur du commerçant), de ces données de paiement au serveur de traitement du prestataire de services de paiement. Dès lors le serveur du prestataire de services de paiement (serveur PSP) met en œuvre les étapes suivantes :

- réception des données de paiement (comprenant notamment les données automatiquement saisies et le code d'authentification courant (CAC)) ;
- contrôle de la validité du code d'authentification courant (CAC) ; et

  - lorsque le code d'authentification courant (CAC) est valide, validation de la transaction ;
  - lorsque le code d'authentification courant (CAC) est invalide, rejet de la transaction ;

En fonction des modes de réalisation, le contrôle de la validité du code d'authentification courant (CAC) est mis en œuvre de plusieurs manières différentes :

- soit le code d'authentification courant (CAC) est directement comparé à un code d'authentification de référence, précédemment reçu de la part de l'utilisateur et du terminal de communication (par exemple lors de la première mise en œuvre du service, comme cela est explicité par la suite) ; dans ce cas une simple comparaison est effectuée ;
- soit les données du code d'authentification courant (CAC) sont utilisées pour décider de la validité de la transaction, par rapport à des données précédemment reçus - cet aspect est également décrit par la suite.

Lorsque les données du code d'authentification courant (CAC) sont utilisées pour effectuer une validation de la transaction, les étapes suivantes sont mises en œuvre :

- déchiffrement du code d'authentification courant (CAC) ; ce déchiffrement est mis en œuvre en utilisant un secret partagé entre le serveur du prestataire de services de paiement et le terminal de communication de l'utilisateur; ce secret a été partagé lors d'une phase d'inscription auprès du prestataire de services de paiement; un mode de réalisation de cette phase d'inscription et de partage de données est décrite par la suite ;
- vérification des données déchiffrées : ces données sont par exemple la donnée d'identification du terminal de communication et la donnée d'authentification de l'utilisateur.

Ainsi, la mise en œuvre de la technique décrite permet d'une part de faciliter les opérations de paiement en ligne pour les utilisateurs et d'autre part d'apporter une sécurisation complémentaire de ces opérations de paiement en ligne.

On décrit, par la suite, un mode de réalisation des opérations de sécurisation. Il est clair cependant, que ce mode de réalisation n'est qu'illustratif des opérations de sécurisation pouvant être réalisées. Plus particulièrement, il est clair que d'autres modes de réalisation, basés par exemple sur la possession de paires de clés privées/publiques par les différents intervenants (terminal de communication, serveur du prestataire de paiement) peuvent également être mises en œuvre sans sortir du cadre posé par la présente.

5.2. Description d'un mode de réalisation

Dans ce mode de réalisation, on présente la manière dont le serveur de traitement entre en possession du matériel nécessaire à la vérification ultérieure du code d'authentification courant (CAC) (cette étape est appelée étape d'inscription).

Dans ce mode de réalisation, on présente également la manière dont le code d'authentification courant (CAC) est produit par le module de traitement (ModT) du terminal de communication. Dans ce mode de réalisation on présente également la manière dont le serveur de traitement réalise la vérification d'un code d'authentification courant (CAC).

Pour ce faire, on considère la donnée d'un couplage bilinéaire symétrique $e: G \times G \to H$ avec un groupe H de petite taille. On rappelle qu'une telle fonction vérifie, pour tous entiers x, y et tous points $g, h$ de $G$:

$$e(g^x, h^y) = e(g, h^y)^x = e(g^x, h)^y = e(g, h)^{xy}$$

$$e(g, h) = e(h, g)$$

Ce couplage bilinéaire est utilisé tant pour étape d'inscription que pour les étapes de vérification ultérieure. Typiquement, la taille du groupe est de 128 bits. Un tel groupe est considéré comme étant de petite taille au regard de la taille usuelle de ces groupes (typiquement 256 bits, voire 512 bits). Cela signifie que, dans cette application, le groupe comprend des nombres dont la longueur est au maximum de 128 bits. Ce groupe comprend par exemple $2^{128}$ éléments : ces éléments ne sont pas (nécessairement) des nombres. Dans l'application considérée, par exemple, il s'agit de points d'une courbe elliptique. Mais il pourrait s'agir de n'importe quel objet adapté à la présente technique.

Dans ce mode de réalisation, il est possible d'utiliser un couplage de Tate qui est défini sur toute courbe elliptique. Cependant, pour des raisons de sécurité et de performance, il est possible d'utiliser des courbes de Barreto-Naehrig. Un tel couplage bilinéaire peut par exemple calculer en utilisant l'algorithme de Miller. Ces éléments sont donnés à titre indicatifs. En effet, n'importe quel couplage pourrait convenir. Cependant, ce couplage particulier présente le double avantage de l'efficacité (c'est l'un des plus rapides) et de la généralité (il s'applique dans une grande majorité de cas).

5.2.1. Inscription auprès du serveur de traitement

On nomme T (T=idTerm, pour plus de facilité de notation) la donnée d'identification fournie par le téléphone lors de l'inscription, et B (B=AuthU, pour plus de facilité de notation) la donnée d'authentification fournie par l'utilisateur. Lors de l'inscription, le serveur de traitement transmet un élément g du groupe H et le terminal de communication transmet, en réponse la donnée constituée de $\{g^T, g^B\}$.

En d'autres termes, l'étape d'inscription comprend pour le terminal de communication, dans ce mode de réalisation :

- une étape de réception, en provenance du serveur de traitement, d'un un élément g ; typiquement, un tel élément est un entier du groupe H;
- une étape de calcul, par le module de traitement (ModT) du terminal de communication, de la donnée constituée de $\{g^T, g^B\}$ ;
- une étape de transmission, par le terminal de communication, de la donnée précédemment calculée.

Cette donnée est enregistrée au sein du serveur de traitement. Elle est associée au terminal de communication de l'utilisateur.

5.2.2. Création du code d'authentification courant (CAC) par le terminal de communication

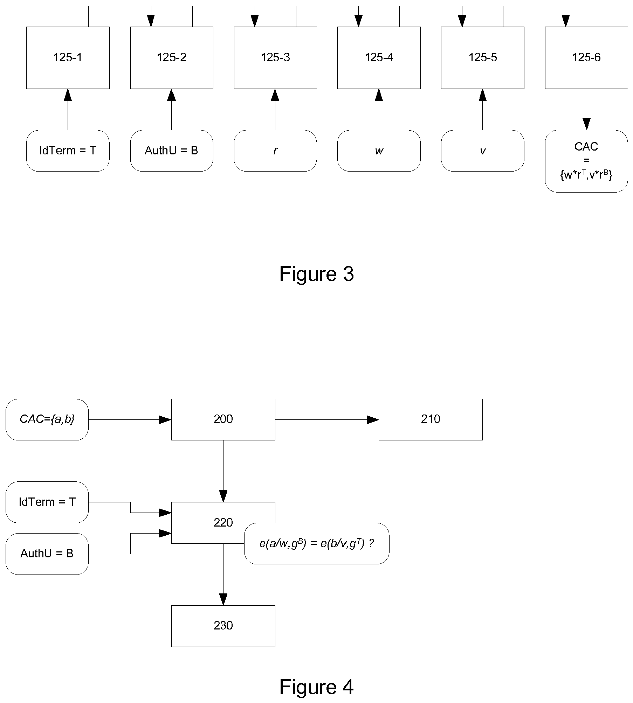

La création du code d'authentification courant (CAC) est décrite en relation avec la figure 3. Comme précédemment, le module de traitement obtient (125-1, 125-2) la donnée d'identification du terminal (T) et la donnée d'authentification de l'utilisateur (B). Lors de la mise en œuvre du paiement, le module de traitement effectue un tirage (125-3) d'un nombre aléatoire r ; le module de traitement effectue (125-4) également un marquage de l'heure w, correspondant à l'heure de traitement de la transaction ; le module de traitement calcule (125-5) également les informations de transaction v (comme par exemple le montant, et/ou le lieu de la transaction et/ou les participants à la transaction). Le module de traitement effectue un calcul du code d'authentification courant (CAC) : $CAC = \{wr^T, vr^B\}$.

Le code d'authentification courant (CAC), ainsi que le nom, le numéro de la carte et la date d'expiration, sont transmises au serveur de traitement. Le nom, le numéro de carte et la date d'expiration peuvent être chiffrés avec CAC lors de cette transmission.

*5.2.3. Vérification du code d'authentification courant (CAC) par le serveur de traitement*

La vérification du code d'authentification courant (CAC) est décrite en relation avec la figure 4. Le serveur de traitement reçoit ainsi $CAC = \{a,b\}$ en tant que code de vérification. Le serveur de traitement reçoit également les autres données de la transaction. Le serveur de traitement étant en possession de T la donnée d'identification fournie par le téléphone lors de l'inscription, et $B$ la donnée d'authentification fournie par l'utilisateur, il effectue les calculs suivants :

- Il divise (200) $a$ par l'heure, et vérifie qu'il n'a pas reçu une même valeur de $a/w$ au cours d'une période temporelle prédéterminée (i.e. la dernière heure, ou les dernières 10 minutes, par exemple). Si cela se produit, la transaction est annulée (210).
- dans le cas contraire, il vérifie (220) que :

$$e(a/w, g^B) = e(b/v, g^T)$$

Si cette égalité est vraie, alors la transaction est validée (230) (et, le cas échéant, le nom et le PAN peuvent être déchiffrés à l'aide du CAC).

Bien entendu ce mode de réalisation de la technique est décrit à titre illustratif. Il est notamment décrit dans le cadre d'une mise en œuvre pour un paiement en ligne. Il est bien entendu que cette technique peut également s'appliquer à d'autres types de paiement et notamment à des paiements mis en œuvre dans un paiement direct chez un commerçant. Auquel cas, le principe décrit précédemment reste le même : à la place de saisir de manière automatique, sur un écran, des données de carte bancaire, on réalise une transmission directe de ces données lues à un serveur du commerçant afin que ces données soient transmise et traitées comme s'il s'agissait d'un paiement réalisé physiquement avec une carte bancaire sur un terminal de paiement physique du commerçant.

5.3. Autres caractéristiques et avantages

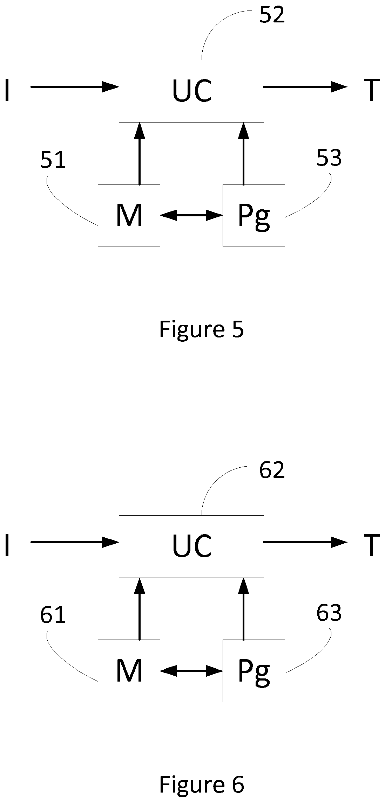

On décrit, en relation avec la **figure 5,** un terminal de communication comprenant des moyens permettant l'exécution du procédé décrit préalablement.

Par exemple, le terminal de communication comprend une mémoire 51 constituée d'une mémoire tampon, une unité de traitement 52, équipée par exemple d'un microprocesseur, et pilotée par le programme d'ordinateur 53, mettant en œuvre les étapes nécessaires à l'obtention, au remplissage, au chiffrement et à la transmission de données de traitement de transactions.

À l'initialisation, les instructions de code du programme d'ordinateur 53 sont par exemple chargées dans une mémoire avant d'être exécutées par le processeur de l'unité de traitement 52. L'unité de traitement 52 reçoit en entrée par exemple un écran ou un formulaire à remplir. Le microprocesseur de l'unité de traitement 52 met en œuvre les étapes du procédé, selon les instructions du programme d'ordinateur 53 pour permettre la saisie des données à partir d'un moyen de paiement sans contact.

Pour cela, le dispositif de traitement comprend, outre la mémoire tampon 51, des moyens d'identification des zones de saisie des données de paiement, des moyens d'obtention de données en provenance de moyens de paiement sans contact (comme un module de lecture NFC), des moyens d'obtention de matériels de chiffrement, des moyens de chiffrement. Le dispositif de traitement comprend également :

- des moyens de détection, d'un affichage d'au moins une zone de saisie relative à une donnée de moyen de paiement ; de tels moyens se présentent par exemple sous la forme d'un module de détection particulier ;
- des moyens d'activation, par le module de traitement, d'un module de lecture de données sans contact ; de tels moyens se présentent par exemple sous le forme d'un circuit de connexion dudit module ;
- des moyens d'obtention, par le module de lecture de données sans contact, d'au moins une donnée de moyen de paiement en provenance d'un moyen de paiement ; ces moyens se présentent sous la forme d'un module d'interrogation de carte bancaire par exemple ;
- des moyens de fourniture, à ladite au moins une zone de saisie, d'au moins une donnée de moyen de paiement précédemment obtenue ; ces moyens se présentent par exemple sous la forme d'un automate de saisie.

Ces moyens peuvent être pilotés par le processeur de l'unité de traitement 52 en fonction du programme d'ordinateur 53.

On décrit, en relation avec la **figure 6,** un serveur de traitement comprenant des moyens permettant l'exécution du procédé décrit préalablement.

Par exemple, le serveur de traitement comprend une mémoire 61 constituée d'une mémoire tampon, une unité de traitement 62, équipée par exemple d'un microprocesseur, et pilotée par le programme d'ordinateur 63, nécessaires à la mise en œuvre des fonctions de vérification des données de transaction.

À l'initialisation, les instructions de code du programme d'ordinateur 63 sont par exemple chargées dans une mémoire avant d'être exécutées par le processeur de l'unité de traitement 62. L'unité de traitement 62 reçoit en entrée par exemple un ensemble de données chiffrées, comprenant par exemple un code d'authentification courant (CAC). Le microprocesseur de l'unité de traitement 62 met en œuvre les étapes du procédé de traitement, selon les instructions du programme d'ordinateur 63 pour permettre le déchiffrement des données chiffrées et la vérification du code d'authentification courant (CAC).

Pour cela, le dispositif comprend, outre la mémoire tampon 61, des moyens d'obtention de clé de chiffrement/déchiffrement ; ces moyens peuvent se présenter sous la forme d'un processeur ou d'un ensemble de ressources sécurisées permettant de sécuriser la saisie de l'autorisation. Le dispositif comprend également des moyens de traitement cryptographiques ; ces moyens de traitement comprennent par exemple un processeur de chiffrement dédié.

Ces moyens peuvent être pilotés par le processeur de l'unité de traitement 62 en fonction du programme d'ordinateur 63.

## Revendications

1. Procédé de sécurisation de traitement de données transactionnelles, procédé mis en œuvre au sein d'un terminal de communication (TC) comprenant un module de traitement (ModT) de données transactionnelles, ledit procédé comprenant :

   - une étape de détection (100), par le module de traitement (ModT), d'un affichage d'au moins une zone de saisie (ZoS) relative à une donnée de moyen de paiement ;
   - une étape d'activation (110), par le module de traitement (ModT), d'un module de lecture de données sans contact (ModSC) ;
   - une étape d'obtention (120), par le module de lecture de données sans contact (ModSC), d'au moins une donnée de moyen de paiement en provenance d'un moyen de paiement ;

   ledit procédé étant **caractérisé en ce qu'**il comprend :

   - une étape de génération (125), par le module de traitement (ModT), d'un code d'authentification courant (CAC), ladite étape de génération comprenant une étape de calcul d'une fonction de couplage bilinéaire symétrique en fonction d'une donnée d'identification (IdTerm) du terminal de communication et d'une donnée d'authentification (AuthU) d'un utilisateur auquel ledit terminal de communication est associé, délivrant le code d'authentification courant (CAC) ;
   - une étape de fourniture (130), à ladite au moins une zone de saisie (ZoS), d'au moins une donnée de moyen de paiement précédemment obtenue et dudit code d'authentification courant (CAC) généré.

2. Procédé de sécurisation de traitement selon la revendication 1, **caractérisé en ce que** le code d'authentification courant (CAC) est fourni dans une zone de saisie (ZoS) du code de vérification de carte bancaire.

3. Procédé de sécurisation de traitement selon la revendication 1, **caractérisé en ce qu'**il comprend en outre une étape préalable d'obtention d'une valeur d'occurrence de mise en œuvre du procédé de sécurisation de traitement et lorsqu'il s'agit de la première occurrence de mise en œuvre du procédé, le procédé comprend une étape de création d'une donnée représentative d'un lien entre le terminal de communication et un serveur de traitement transactionnel, dite donnée d'authentification de référence.

4. Procédé de sécurisation de traitement selon la revendication 3, **caractérisé en ce que** l'étape de création de la donnée d'authentification de référence entre le terminal de communication et un serveur de traitement transactionnel comprend :

   - une étape d'obtention d'une donnée d'identification du terminal de communication ;
   - une étape d'obtention d'une donnée d'authentification dudit utilisateur auquel ledit terminal de communication est associé ;

- une étape de chiffrement de ladite donnée d'identification du terminal de communication et de ladite donnée d'authentification dudit utilisateur, délivrant la donnée d'authentification de référence ;
- une étape de transmission de la donnée d'authentification de référence à un serveur de traitement.

5. Procédé de traitement, selon la revendication 3, **caractérisé en ce qu'**il comprend, lors de la réception des données issues de ladite au moins une zone de saisie par un serveur de traitement, au moins une étape de comparaison entre au moins une donnée transmise au sein de ladite zone de saisie et de la donnée d'authentification de référence, délivrant une assertion de validation de la transaction.

6. Terminal de communication intelligent (TC) **caractérisé en ce qu'**il comprend un module de traitement de données transactionnelles (ModT) et un module d'obtention de données sans contact (ModSC), ledit module de traitement (ModT) comprenant :

- des moyens de détection (100), d'un affichage d'au moins une zone de saisie (ZoS) relative à une donnée de moyen de paiement ;
- des moyens d'activation (110), du module de lecture de données sans contact (ModSC) ;
- des moyens d'obtention (120), par le module de lecture de données sans contact (ModSC), d'au moins une donnée de moyen de paiement en provenance d'un moyen de paiement ; ledit module de traitement (ModT) étant **caractérisé en ce qu'**il comprend :

- des moyens de génération (125), par le module de traitement (ModT), d'un code d'authentification courant (CAC), lesdits moyens de génération comprenant des moyens de calcul d'une fonction de couplage bilinéaire symétrique en fonction d'une donnée d'identification (IdTerm) du terminal de communication et d'une donnée d'authentification (AuthU) d'un utilisateur auquel ledit terminal de communication est associé, délivrant le code d'authentification courant (CAC) ;
- des moyens de fourniture (130), à ladite au moins une zone de saisie (ZoS), d'au moins une donnée de moyen de paiement précédemment obtenue et dudit code d'authentification courant (CAC) généré.

7. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de sécurisation de traitement selon une des revendications 1 à 5, lorsqu'il est exécuté par un processeur.

## Patentansprüche

1. Verfahren zur Sicherung der Verarbeitung transaktioneller Daten, Verfahren, das in einem Kommunikationsendgerät (TC) umgesetzt wird, das ein Modul zur Verarbeitung (ModT) transaktioneller Daten aufweist, wobei das Verfahren aufweist:

- einen Schritt des Erfassens (100) eines Anzeigens mindestens eines Eingabefeldes (ZoS) in Bezug auf eine Dateneinheit eines Zahlungsmittels durch das Modul zur Verarbeitung (ModT),
- einen Schritt des Aktivierens (110) eines kontaktlosen Datenlesemoduls (ModSC) durch das Modul zur Verarbeitung (ModT),
- einen Schritt des Erhaltens (120) mindestens einer Dateneinheit eines Zahlungsmittels von einem Zahlungsmittel durch das kontaktlose Datenlesemodul (ModSC),

wobei das Verfahren **dadurch gekennzeichnet ist, dass** er aufweist:

- einen Schritt des Generierens (125) eines aktuellen Authentifizierungscodes (CAC) durch das Modul zur Verarbeitung (ModT), wobei der Schritt des Generierens einen Schritt des Berechnens einer symmetrischen bilinearen Kopplungsfunktion in Abhängigkeit von einer Identifizierungsdateneinheit (IdTerm) des Kommunikationsendgeräts und einer Authentifizierungsdateneinheit (AuthU) eines Nutzers, mit dem das Kommunikationsendgerät verbunden ist, wodurch der aktuelle Authentifizierungscode (CAC) ausgegeben wird,
- einen Schritt des Bereitstellens (130) dem mindestens einen Eingabefeld (ZoS) mindestens einer Dateneinheit eines Zahlungsmittels, die zuvor erhalten wird, und des generierten aktuellen Authentifizierungscodes (CAC).

2. Verfahren zur Sicherung der Verarbeitung nach Anspruch 1, **dadurch gekennzeichnet, dass** der aktuelle Authentifizierungscode (CAC) in einem Eingabefeld (ZoS) des Verifizierungscode der Bankkarte bereitgestellt wird.

3. Verfahren zur Sicherung der Verarbeitung nach Anspruch 1, **dadurch gekennzeichnet, dass** es ferner einen vorherigen Schritt des Erhaltens eines Wertes der Auftrittshäufigkeit des Umsetzens des Verfahrens zur Sicherung der Verarbeitung aufweist und wenn es sich um das erste Auftreten des Umsetzens des Verfahrens handelt, weist das Verfahren einen Schritt des Erstellens einer Dateneinheit auf, die für eine Verbindung zwischen dem Kommunikationsendgerät und einem Transaktionsverarbeitungsserver repräsentativ ist, die Referenz-Authentifizierungsdateneinheit genannt wird.

4. Verfahren zur Sicherung der Verarbeitung nach Anspruch 3, **dadurch gekennzeichnet, dass** der Schritt des Erstellens der Referenz-Authentifizierungsdateneinheit zwischen dem Kommunikationsendgerät und einem Transaktionsverarbeitungsserver aufweist:

   - ein Schritt des Erhaltens einer Identifizierungsdateneinheit des Kommunikationsendgeräts,
   - einen Schritt des Erhaltens einer Authentifizierungsdateneinheit des Nutzers, mit dem das Kommunikationsendgerät verbunden ist,
   - einen Schritt des Verschlüsselns der Identifizierungsdateneinheit des Kommunikationsendgerätsund der Authentifizierungsdateneinheit des Nutzers, wodurch die Referenz-Authentifizierungsdateneinheit ausgegeben wird,
   - ein Schritt des Übertragens der Referenz-Authentifizierungsdateneinheit an einen Verarbeitungsserver.

5. Verfahren zur Sicherung nach Anspruch 3, **dadurch gekennzeichnet, dass** es beim Empfangen der Daten, die aus mindestens einem Eingabefeld stammen, durch einen Verarbeitungsserver, mindestens einen Schritt des Vergleichens zwischen mindestens einer Dateneinheit, die innerhalb des Eingabefeldes übertragen wird, und der Referenz-Authentifizierungsdateneinheit aufweist, wodurch eine Validierungsbehauptung der Transaktion ausgegeben wird.

6. Intelligentes Kommunikationsendgerät (TC), **dadurch gekennzeichnet, dass** es ein Modul zur Verarbeitung transaktioneller Daten (ModT) und ein kontaktloses Modul zum Erhalten von Daten (ModSC) aufweist, wobei das Modul zur Verarbeitung (ModT) aufweist:

   - Mittel zum Erfassen (100) eines Anzeigens mindestens eines Eingabefeldes (ZoS) in Bezug auf eine Dateneinheit eines Zahlungsmittels,
   - Mittel zum Aktivieren (110) des kontaktlosen Datenlesemoduls (ModSC),
   - Mittel zum Erhalten (120) mindestens einer Dateneinheit eines Zahlungsmittels von einem Zahlungsmittel durch das kontaktlose Datenlesemodul (ModSC), wobei das Modul zur Verarbeitung (ModT) **dadurch gekennzeichnet ist, dass** es aufweist:

      - Mittel zum Generieren (125) eines aktuellen Authentifizierungscodes (CAC) durch das Modul zur Verarbeitung (ModT), wobei die Mittel zum Generieren Mittel zum des Berechnens einer symmetrischen bilinearen Kopplungsfunktion in Abhängigkeit von einer Identifizierungsdateneinheit (IdTerm) des Kommunikationsendgeräts und einer Authentifizierungsdateneinheit (AuthU) eines Nutzers, mit dem das Kommunikationsendgerät verbunden ist, aufweisen, wodurch der aktuelle Authentifizierungscode (CAC) ausgegeben wird,
      - Mittel zum Bereitstellen (130) dem mindestens einen Eingabefeld (ZoS) mindestens einer Dateneinheit eines Zahlungsmittels, die zuvor erhalten ist, und des generierten aktuellen Authentifizierungscodes (CAC).

7. Computerprogrammprodukt, das von einem Kommunikationsnetz herunterladbar ist und/oder auf einem computerlesbaren Aufzeichnungsmedium gespeichert ist und/oder von einem Mikroprozessor ausführbar ist, **dadurch gekennzeichnet, dass** es Programmcodeanweisungen zum Ausführen eines Verfahrens zur Sicherung nach einem der Ansprüche 1 bis 5 aufweist, wenn es von einem Prozessor ausgeführt wird.


**Claims**

1. Method for securing the processing of transactional data, the method being implemented within a communications terminal (TC) comprising a transactional data processing module (ModT), said method comprising:

   - a step (100) for the detection, by the processing module (ModT), of a display of at least one entry area (ZoS) relating to a piece of payment means data;
- a step (110) for the activation, by the processing module (ModT), of a contactless data reading module (ModSC);
- a step (120) for the obtaining, by the contactless data reading module (ModSC), of at least one piece of payment means data coming from a payment means;

said method being **characterized in that** it comprises:

- a step (125) for the generation, by the processing module (ModT), of a current authentication code (CAC), said step for the generation comprising a step for the computing of a symmetric bilinear coupling function as a function of a piece of identification data (IdTerm) of the communications terminal and of a piece of authentication data (AuthU) of an user with whom said communications terminal is associated, delivering said current authentication code (CAC);
- a step (130) for the furnishing, at said at least one entry area (ZoS), of at least one piece of payment means data previously obtained and of said generated current authentication code (CAC).

2. Method for securing processing according to claim 1, **characterized in that** the current authentication code (CAC) is provided in an entry area (ZoS) for the bank card verification code.

3. Method for securing processing according to claim 1, **characterized in that** it further comprises a preliminary step for obtaining a value of occurrence of implementation of the method for securing processing, and when it is the first occurrence of implementation of the method, the method comprises a step for creating a piece of data representing a link between the communications terminal and a transaction processing server, called a piece of reference authentication data.

4. Method for securing processing according to claim 3, **characterized in that** the step for creating a piece of reference authentication data between the communications terminal and a transaction processing server comprises:

- a step for obtaining a piece of identification data of the communications terminal;
- a step for obtaining a piece of authentication data for said user with whom said communications terminal is associated;
- a step of encryption of said identification data of said communications terminal and said authentication data of said user, delivering the piece of reference authentication data;
- a step for transmitting said piece of reference authentication data to a processing server.

5. Method for processing, according to claim 3, **characterized in that** it comprises, during the reception, by a processing server, of the data coming from said at least one entry area, at least one step of comparison between at least one piece of data transmitted within said entry area and the piece of reference authentication data, delivering an assertion of validation of the transaction.

6. Smart communications terminal (TC) **characterized in that** it comprises a processing module for processing transactional data (ModT) and a module for obtaining contactless data (ModSC), said processing module (ModT) comprising:

- means (100) for detecting a display of at least one entry area (ZoS) for a piece of payment means data;
- means (110) for activating the contactless data reading module (ModSC);
- means (120) for the obtaining, by means of the contactless data reading module (ModSc), of at least one piece of payment means data coming from a payment means;

said processing module (ModT) being **characterized in that** it comprises:

- means (125) for the generation, by the processing module (ModT), of a current authentication code (CAC), said means for the generation comprising means for the computing of a symmetric bilinear coupling function as a function of a piece of identification data (IdTerm) of the communications terminal and of a piece of authentication data (AuthU) of an user with whom said communications terminal is associated, delivering said current authentication code (CAC);
- means (130) for the furnishing, at said at least one entry area (ZoS), of at least one piece of payment means data previously obtained and of said generated current authentication code (CAC).

7. Computer program product downloadable from a communications network and/or stored in a computer-readable carrier and/or executable by a microprocessor, **characterized in that** it comprises program code instructions for executing a method for securing processing according to anyone of claims 1 to 5, when it is executed by a processor.

EP 3 163 487 B1

Figure 1

Figure 2

Figure 3

Figure 4

Figure 5

Figure 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011225090 A1